# EUROPÄISCHE PATENTSCHRIFT

(11) **EP 3 211 269 B1**
(45) Veröffentlichungstag und Bekanntmachung des Hinweises auf die Patenterteilung: **22.04.2020**
(21) Anmeldenummer: 17155769.7
(22) Anmeldetag: 13.02.2017
(51) Int. Cl.: F16H 3/00, F16H 3/093

(54) **DOPPELKUPPLUNGSGETRIEBE FÜR KRAFTFAHRZEUGE**
DUAL CLUTCH TRANSMISSION FOR MOTOR VEHICLES
BOÎTE DE VITESSES À DOUBLE EMBRAYAGE POUR VÉHICULES AUTOMOBILES

(30) Priorität: 25.02.2016 DE 102016202914
(43) Veröffentlichungstag der Anmeldung: 30.08.2017
(73) Patentinhaber: Ford Global Technologies, LLC, Dearborn, MI 48126 (US)
(72) Erfinder: Kirchhoffer, Johann, 50737 Köln (DE)
(74) Vertreter: Dörfler, Thomas

(56) Entgegenhaltungen:
- DE-A1-102013 019 120
- FR-A3- 2 976 039

## Beschreibung

Die Erfindung betrifft ein Doppelkupplungsgetriebe für Kraftfahrzeuge mit einer ersten Eingangswelle und einer zweiten Eingangswelle, zwei Kupplungen, über die die erste Eingangswelle und die zweite Eingangswelle wahlweise mit einem Antriebsmotor kuppelbar sind, zwei parallel zu den Getriebeeingangswellen angeordneten Zwischenwellen, Zahnradpaarungen von Festrädern und Losrädern, von denen ein erstes Zahnrad auf einer der Eingangswellen und ein zweites Zahnrad auf einer der Zwischenwellen angeordnet ist, wobei sämtliche auf den Zwischenwellen angeordneten Zahnräder als Losräder ausgebildet sind, Kopplungsvorrichtungen, über die die Losräder mit der jeweiligen Zwischenwelle wahlweise verbindbar sind, wobei die für die Abtriebszahnräder (21, 26) der Zwischenwellen (13, 14) vorgesehenen Kopplungsvorrichtungen (22, 27) zweiseitig wirkend ausgebildet sind, und je einem auf den beiden Zwischenwellen angeordneten Abtriebszahnrad, wobei die Abtriebszahnräder beider Zwischenwellen mit einem Differentialrad kämmen und drehfest mit der jeweiligen Zwischenwelle wechselweise verbindbar sind.

Es ist ein Bestreben der Automobilindustrie, dass zur Reduzierung von Emissionen während der Fahrt der Betriebszustand des Antriebsmotors optimal an den aktuellen Fahrzustand des Kraftfahrzeugs angepasst wird. Dies kann beispielsweise dadurch erfolgen, dass das Getriebe eine große Gangzahl aufweist. Dabei erfolgt die Schaltung in der Weise, dass auch bei hohen Fahrgeschwindigkeiten die Motordrehzahl möglichst gering gehalten wird. Ein weiteres Ziel besteht darin, die ohne Last mitdrehenden Massen gering zu halten, um dadurch eine weitere Reduzierung der Emissionen zu bewirken.

In herkömmlicher Bauweise bedeutet eine große Gangzahl zwangsläufig eine größere Anzahl von Getriebezahnrädern und daher eine größere Baulänge, die aber in der modernen Kraftfahrzeugtechnik nicht gewünscht ist, sowie ein größeres Gewicht des Getriebes und damit verbundene höhere Verlustleistungen.

Bekannte Getriebe (WO 2012/084250 A1; DE 10 2013 216 387 A1) beschreiten daher bereits einen Weg in die gewünschte Richtung, indem die Möglichkeit geschaffen wird, dass der Leistungsfluss sowohl über eine der ersten Getriebeeingangswelle zugeordneten Zahnradstufe als auch über eine der zweiten Getriebeeingangswelle zugeordneten Zahnradstufe verläuft.

Bei solchen Doppelkupplungsgetrieben sind die Getriebeeingangswellen als Innen- und Außenwelle ausgebildet, wobei die Innenwelle und die Außenwelle wahlweise antreibbar sind. Die zusätzlich geschalteten Gänge können dann über einen Umweg geführt werden, der über solche Zahnräder verläuft, die auf der jeweiligen nicht angetriebenen Getriebeeingangswelle angeordnet sind.

Diese bekannten Doppelkupplungsgetriebe, mit denen sich zusätzlich zu den vorhandenen Zahnradpaarungen und den sich daraus ergebenden Gängen weitere Gänge schalten lassen, benötigen zu diesem Zweck auf den Zwischenwellen und zum Teil auch auf den Getriebeeingangswellen Hohlwelleneinrichtungen, auf denen jeweils mindestens zwei Zahnräder angeordnet sind, wobei die Hohlwellen lose auf den Getriebeeingangswellen und Zwischenwellen mitlaufen, jedoch bei Bedarf mit diesen drehfest verbunden werden können.

Die Verwendung derartiger Hohlwellenanordnungen stellt nicht nur einen hohen zusätzlichen Gewichtsanteil dar, sondern führt auch zu einer Vergrößerung der Baulängen bzw. Bauhöhen sowie zu einem verschlechterten Wirkungsgrad des Getriebes.

Bei einem bekannten Doppelkupplungsgetriebe der genannten Art (FR 2976039 A3) sind sowohl einseitig wirkende als auch zweiseitig wirkende Kopplungsvorrichtungen auf den Zwischenwellen vorhanden. Die einseitig wirkenden Kopplungsvorrichtungen sind dazu erforderlich, in bestimmten Schaltphasen die benachbarten Losräder gleichzeitig fest mit der jeweiligen Zwischenwelle zu verbinden.

Das gleiche gilt für ein weiteres bekanntes Doppelkupplungsgetriebe (DE 10 2013 019 120 A1), bei dem auf den Zwischenwellen ebenfalls sowohl einseitig wirkende als auch zweiseitig wirkende Kopplungsvorrichtungen vorhanden sind.

Der Erfindung liegt daher die Aufgabe zugrunde, ein Doppelkupplungsgetriebe zu schaffen, das unter Beibehaltung der Vorteile der bekannten Doppelkupplungsgetriebe eine große Gangzahl ermöglicht, ohne dass weder die Abmessungen des Getriebes vergrößert noch dessen Gewicht wesentlich erhöht wird.

Erfindungsgemäß wird dies Aufgabe dadurch gelöst, dass sämtliche auf den Zwischenwellen vorgesehenen Kopplungsvorrichtungen zweiseitig wirkend ausgebildet sind.

Durch die Erfindung wird eine Lösung geschaffen, mit der auf sehr einfache und unkomplizierte Weise mit wenigen Radsätzen ein Doppelkupplungsgetriebe geschaffen wird, mit welchem eine hohe Gangzahl schaltbar ist. Ein wesentliches Merkmal stellen dabei die auf den Zwischenwellen angeordneten Abtriebszahnräder dar, die es ermöglichen, sogenannte Verwindungsgänge zu schaffen. Die als Losräder ausgebildeten Abtriebszahnräder können mit Hilfe von Kopplungsvorrichtungen mit ihrer jeweiligen Zwischenwelle verbunden werden, wobei besonders hervorzuheben ist, dass zumindest die für die Abtriebszahnräder der Zwischenwelle vorgesehenen Kopplungsvorrichtungen zweiseitig wirkend ausgebildet sind, sodass mit diesen Kopplungsvorrichtungen auch das jeweils benachbarte, auf der Zwischenwelle angeordnete Losrad fest mit seiner Zwischenwelle verbunden werden kann.

Das Getriebe kann vier oder fünf der zuvor genannten Zahnradpaarungen aufweisen, von denen jeweils die treibenden Zahnräder auf den Eingangswellen sitzen.

Bei einem bevorzugten Ausführungsbeispiel ist das erfindungsgemäße Getriebe mit vier solcher zuvor genannten Zahnradpaarungen und fünf Kopplungsvorrichtungen ausgerüstet. Dabei sind zweckmäßig der 1. und der 4. Gang auf der einen Zwischenwelle und der 2. und 3. Gang auf der anderen Zwischenwelle positioniert.

Mit einem solchen Getriebe können acht Vorwärtsgänge und zwei Rückwärtsgänge erzielt werden.

Dies erfolgt beispielsweise dadurch, dass der 3., 4., 5. und 6. Vorwärtsgang als Basisgänge schaltbar sind.

Der 1., 2., 7. und 8. Vorwärtsgang können dann jeweils als Verwindungsgänge über beide Zwischenwellen schaltbar gestaltet werden.

Bei einer solchen Konstruktion können der 2. bis 7. Vorwärtsgang ohne Zugkraftunterbrechung schaltbar sein.

Bei einem Getriebe mit fünf der zuvor genannten Zahnradpaarungen können sechs Kopplungsvorrichtungen vorgesehen sein.

Dabei sind der 1. und 3. Gang auf einer der Zwischenwellen und der 5. Gang auf der anderen Zwischenwelle positioniert. Der 2. und der 4. Gang können wahlweise auf der ersten oder der zweiten Zwischenwelle positioniert sein.

Mit einem solchen Getriebe lassen sich elf Vorwärtsgänge und zwei Rückwärtsgänge erzielen.

Dabei können der 4. bis 8. Vorwärtsgang als Basisgänge schaltbar sein, während der 1. bis 3. und der 9. bis 11. Vorwärtsgang als Verwindungsgänge über die Zahnradpaarungen beider Zwischenwellen schaltbar sind.

Bei einer solchen Konstruktion können der 4. bis 9. Vorwärtsgang ohne Zugkraftunterbrechung schaltbar sein.

Die Erfindung ist in der Zeichnung beispielhaft veranschaulicht und im Nachstehenden im Einzelnen anhand der Zeichnung beschrieben. Es zeigen:
- Fig. 1:: ein erstes Ausführungsbeispiel des erfindungsgemäßen Doppelkupplungsgetriebes mit vier Radsätzen,
- Fig. 2:: eine Tabelle zur Schaltung von acht Vorwärtsgängen und zwei Rückwärtsgängen mit dem Getriebe gemäß Fig. 1,
- Fig. 3:: den Leistungsfluss für den 1. Gang,
- Fig. 4:: den Leistungsfluss für den 2. Gang,
- Fig. 5:: den Leistungsfluss für den 3. Gang,
- Fig. 6:: den Leistungsfluss für den 4. Gang,
- Fig. 7:: den Leistungsfluss für den 5. Gang,
- Fig. 8:: den Leistungsfluss für den 6. Gang,
- Fig. 9:: den Leistungsfluss für den 7. Gang,
- Fig. 10:: den Leistungsfluss für den 8. Gang,
- Fig. 11:: den Leistungsfluss für den 1. Rückwärtsgang,
- Fig. 12:: den Leistungsfluss für den 2. Rückwärtsgang,
- Fig. 13:: ein zweites Ausführungsbeispiel des erfindungsgemäßen Doppelkupplungsgetriebes mit fünf Radsätzen,
- Fig. 14:: eine Tabelle zur Schaltung von elf Vorwärtsgängen und zwei Rückwärtsgängen mit dem Getriebe gemäß Fig. 13,
- Fig. 15:: den Leistungsfluss für den 1. Gang,
- Fig. 16:: den Leistungsfluss für den 2. Gang,
- Fig. 17:: den Leistungsfluss für den 3. Gang,
- Fig. 18:: den Leistungsfluss für den 4. Gang,
- Fig. 19:: den Leistungsfluss für den 5. Gang,
- Fig. 20:: den Leistungsfluss für den 6. Gang,
- Fig. 21:: den Leistungsfluss für den 7. Gang,
- Fig. 22:: den Leistungsfluss für den 8. Gang,
- Fig. 23:: den Leistungsfluss für den 9. Gang,
- Fig. 24:: den Leistungsfluss für den 10. Gang,
- Fig. 25:: den Leistungsfluss für den 11. Gang,
- Fig. 26:: den Leistungsfluss für den 1. Rückwärtsgang,
- Fig. 27:: den Leistungsfluss für den 2. Rückwärtsgang,

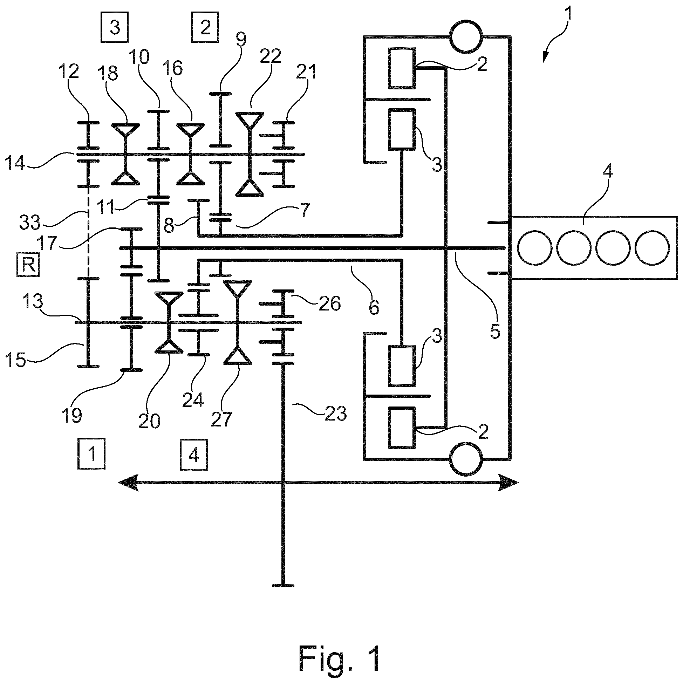

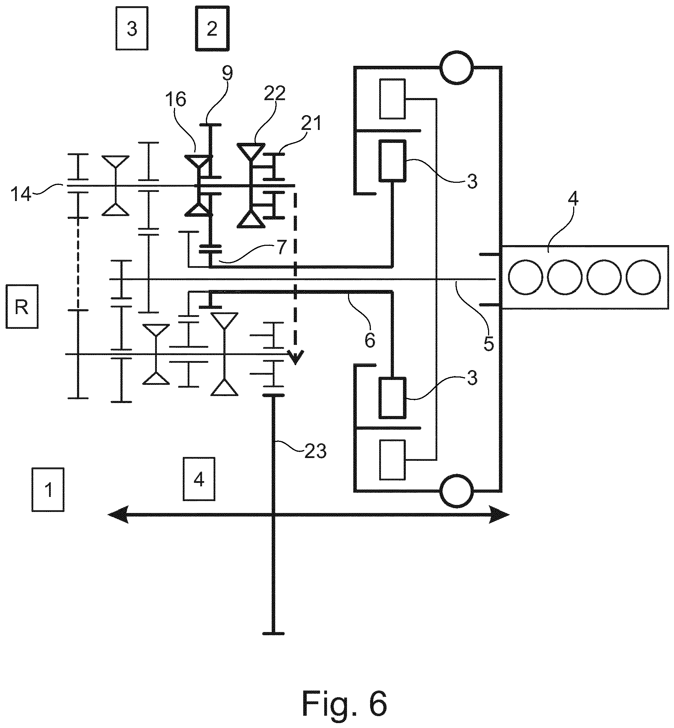

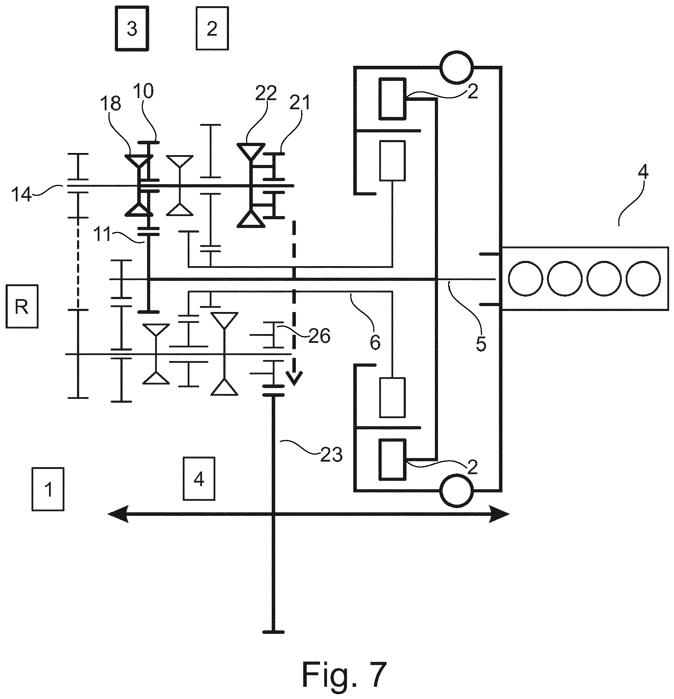

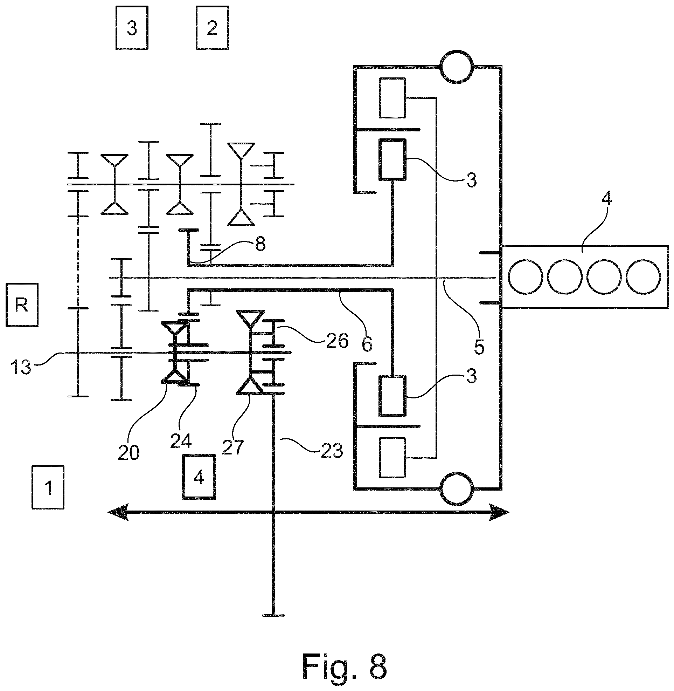

Bei dem in den Figuren 1 bis 12 veranschaulichten Getriebe handelt es sich um ein Doppelkupplungsgetriebe mit vier Zahnradpaarungen von Festrädern und Losrädern, bei dem die vier Zahnradpaarungen mit den Ziffern 1 bis 4 und der Rückwärtsgang mit R jeweils mit quadratischer Umrandung veranschaulicht sind.

Das in Fig. 1 dargestellte Doppelkupplungsgetriebe 1 umfasst zwei an sich bekannte Reibkupplungen 2 und 3, die den von einem Antriebsmotor 4 gelieferten Leistungsfluss wahlweise auf zwei Eingangswellen übertragen. Die Eingangswellen sind als Innenwelle 5 und Außenwelle 6 ausgebildet, wobei sich die Innenwelle 5 koaxial durch die Außenwelle 6 erstreckt.

Auf der Außenwelle 6 sind zwei Zahnräder 7 und 8 drehfest angeordnet.

Im Inneren des in der Zeichnung nicht dargestellten Getriebegehäuses ragt die Innenwelle 5 ein Stück aus der Außenwelle 6 heraus, wobei auf dem aus der Außenwelle 6 herausragenden Ende der Innenwelle 5 zwei drehfest mit der Innenwelle 5 verbundene Zahnräder 11 und 17 angeordnet sind.

Ferner sind zwei Zwischenwellen 13 und 14 vorgesehen, auf denen ebenfalls Zahnräder angeordnet sind. Die auf den Zwischenwellen 13, 14 angeordneten Zahnräder sind als Losräder drehbar gelagert und können je nach Einlegen des gewünschten Gangs über Kopplungsvorrichtungen drehfest mit den Zwischenwellen 13 und 14 verbunden werden.

In dem dargestellten Ausführungsbeispiel kämmt das auf der Außenwelle 6 sitzende Zahnrad 8 mit einem auf der ersten Zwischenwelle 13 drehbar angeordneten Zahnrad 24, während das Zahnrad 7 der Außenwelle 6 mit einem drehbar auf der zweiten Zwischenwelle 14 gelagerten Zahnrad 9 im Eingriff steht.

Das Zahnrad 17 der Innenwelle 5 kämmt mit einem drehbar auf der ersten Zwischenwelle 13 angeordneten Zahnrad 19, während das auf der Innenwelle 5 sitzende Zahnrad 11 mit einem drehbar auf der zweiten Zwischenwelle 14 gelagerten Zahnrad 10 im Eingriff steht.

Auf der in der Zeichnung rechts liegenden Seite ist die erste Zwischenwelle 13 mit einem lose auf dieser gelagerten Abtriebszahnrad 26 versehen, und die zweite Zwischenwelle 14 weist an derselben Stelle ein lose auf dieser gelagertes Abtriebszahnrad 21 auf. Auf der linken Seite ist die erste Zwischenwelle 13 mit einem drehfest angeordneten Zahnrad 15 ausgestattet, welches für den Rückwärtsgang mit einem drehbar auf der zweiten Zwischenwelle 14 sitzenden Zahnrad 12 im Eingriff steht. Der Eingriff dieser beiden Zahnräder 15 und 12 ist durch eine gestrichelte Linie 33 gekennzeichnet.

Die auf der rechten Seit der Zwischenwellen 13 und 14 gelagerten Abtriebszahnräder 21 und 26 kämmen beide mit dem Differentialzahnrad 23, über das der Leistungsfluss auf die Räder des Fahrzeugs übertragen wird.

Zur Schaltung des Getriebes sind fünf Kopplungsvorrichtungen vorgesehen, und zwar eine Kopplungsvorrichtung 27 zwischen dem auf der ersten Zwischenwelle 13 sitzenden Abtriebszahnrad 26 und dem ebenfalls auf dieser angeordneten Zahnrad 24 sowie eine Kopplungsvorrichtung 20 zwischen den Zahnrädern 24 und 19 der ersten Zwischenwelle 13.

Auf der zweiten Zwischenwelle 14 ist eine Kopplungsvorrichtung 22 zwischen dem Abtriebszahnrad 21 und dem benachbarten Zahnrad 9, eine weitere Kopplungsvorrichtung 16 zwischen den beiden ebenfalls auf der zweiten Zwischenwelle 14 angeordneten Zahnräder 9 und 10 sowie eine dritte Kopplungsvorrichtung 18 zwischen dem Zahnrad 10 und dem am linken Ende sitzenden, für den Rückwärtsgang vorgesehenen Zahnrad 12.

Sämtliche fünf Kopplungsvorrichtungen sind zweiseitig wirkend ausgebildet. Das hat beispielsweise bei den für die Abtriebszahnräder 21 und 26 vorgesehenen Kopplungsvorrichtungen 22 und 27 die Wirkung, dass die Abtriebszahnräder 21 und 26 mit ihren Zwischenwellen 13 bzw. 14 verbindbar sind, und in der nach links verschobenen Position der Kopplungsvorrichtungen 22 und 27 ein zusätzlicher Verwindungsgang geschaltet werden kann, während gleichzeitig die Antriebszahnräder 21 und 26 lose um ihre jeweilige Zwischenwelle 13 bzw. 14 rotieren können.

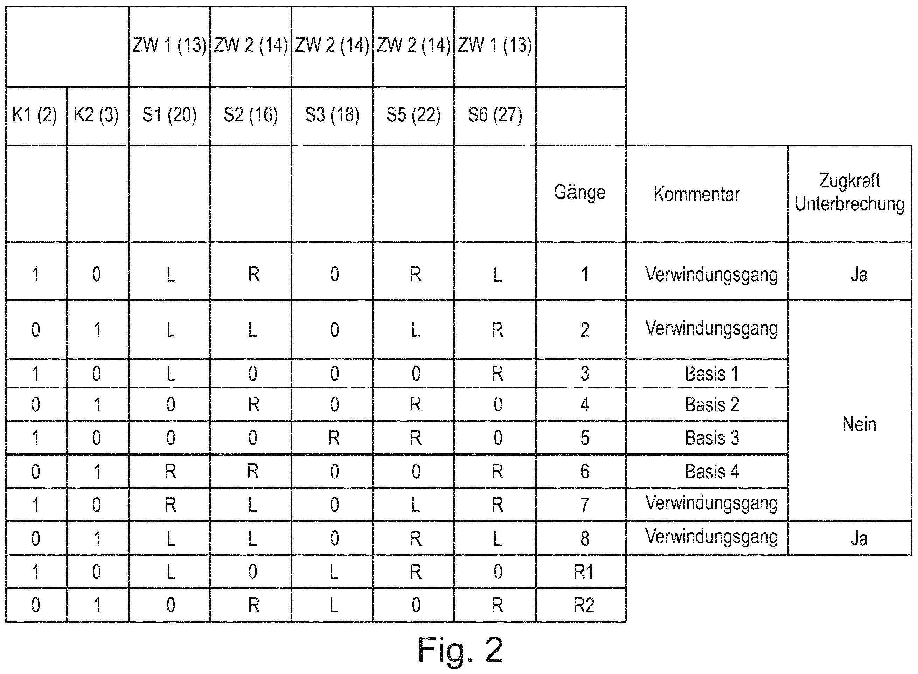

Mit einem solchen Getriebe mit vier Zahnradpaarungen und fünf Kopplungsvorrichtungen lassen sich acht Vorwärtsgänge schalten, die in der in Fig. 2 dargestellten Tabelle veranschaulicht sind. Dabei bedeuten K1 und K2 die in der Zeichnung mit 2 und 3 dargestellten Kupplungen, wobei die Zahl "1" die Kupplung als geschlossen und die "0" als offen kennzeichnet. ZW 1 und ZW 2 bezeichnet die in der Zeichnung dargestellten Zwischenwellen 13 und 14 und S1, S2, S3, S5 und S6 die fünf Kopplungsvorrichtungen 20, 16, 18, 22 und 27.

Der in der Tabelle verwendete Buchstabe "L" steht für eine Verschiebung der jeweiligen Kopplungsvorrichtung nach links, das "R" für eine Verschiebung nach rechts und die "0" für die neutrale Stellung, in der die jeweilige Kopplungsvorrichtung inaktiv geschaltet ist.

Ferner gehen aus dieser Tabelle gemäß Fig. 2 auch die Schaltstellungen für die beiden Rückwärtsgänge R1 und R2 hervor.

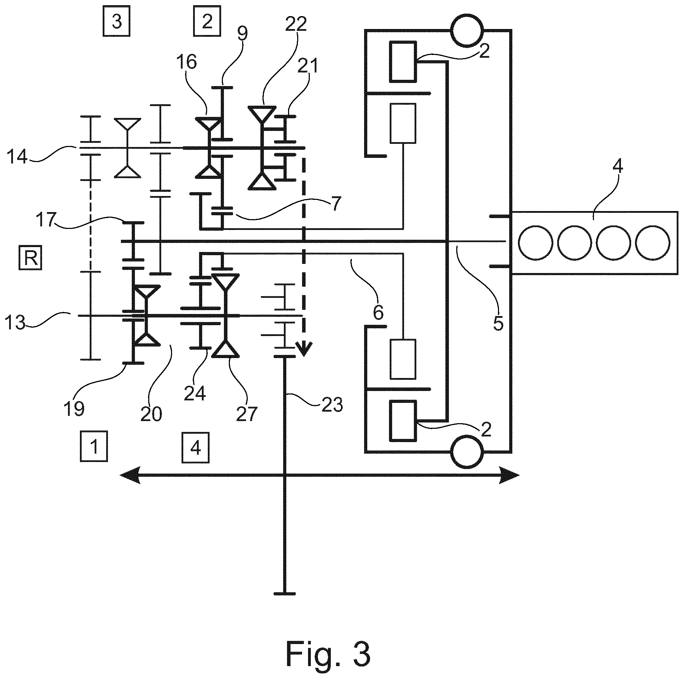

In den folgenden Figuren 3 bis 12 sind jeweils die zu den einzelnen Gängen gehörenden Leistungsflüsse veranschaulicht, wobei der jeweilige Leistungsfluss durch dick ausgezogene Linien gekennzeichnet ist, während die inaktiven Getriebeteile in dünnen Linien dargestellt sind.

In Fig. 3 ist der Leistungsfluss für den 1. Gang dargestellt. Dabei treibt der Antriebsmotor 4 über die Reibkupplung 2 die Innenwelle 5 an. Das fest auf der Innenwelle 5 sitzende Zahnrad 17 kämmt dabei mit dem auf der ersten Zwischenwelle 13 sitzenden Zahnrad 19, welches über die Kopplungsvorrichtung 20 drehfest mit der ersten Zwischenwelle 13 verbunden ist.

In gleicher Weise ist das auf der ersten Zwischenwelle 13 sitzende Zahnrad 24 über die Kopplungsvorrichtung 27 drehfest mit der ersten Zwischenwelle 13 verbunden und kämmt mit dem auf der leer mitlaufenden Außenwelle 6 sitzenden Zahnrad 8. Das Zahnrad 7 der Außenwelle 6 kämmt dabei mit dem auf der zweiten Zwischenwelle 14 sitzenden Zahnrad 9, welches über die Kopplungsvorrichtung 16 drehfest mit der zweiten Zwischenwelle 14 verbunden ist.

Die Kopplungsvorrichtung 22 ist in diesem geschalteten Gang nach rechts verschoben und verbindet das Abtriebszahnrad 21 drehfest mit der zweiten Zwischenwelle 14.

Da beide Abtriebszahnräder 21 und 26 mit dem Differentialzahnrad 23 kämmen und das auf der ersten Zwischenwelle 13 sitzende Abtriebszahnrad 26 lose mitläuft, wird das Differentialzahnrad 23 über das Abtriebszahnrad 21 der zweiten Zwischenwelle 14 angetrieben und überträgt den Leistungsfluss auf die Räder.

Bei der Schaltung dieses 1. Gangs handelt es sich um einen Verwindungsgang, bei dem der Leistungsfluss von der Innenwelle 5 über die erste Zwischenwelle 13, die zweite Zwischenwelle 14 und von dort auf das Differentialzahnrad 23 erfolgt.

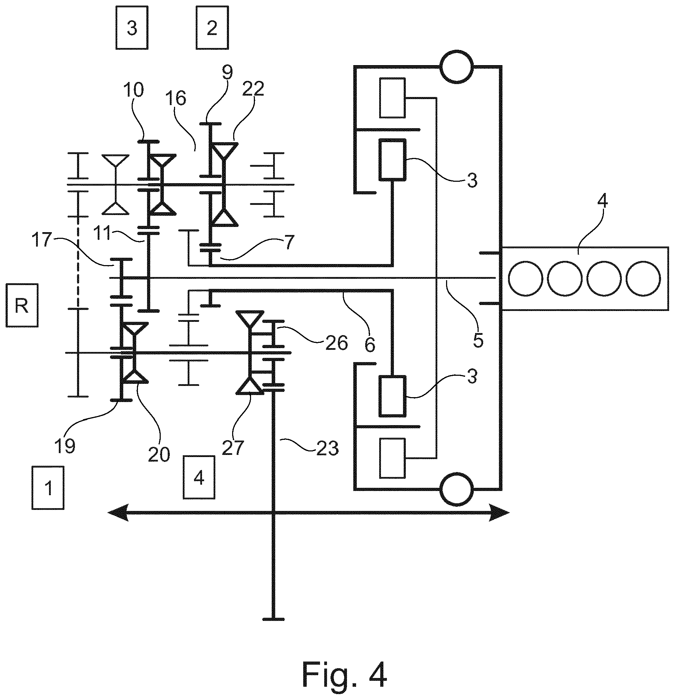

Fig. 4 veranschaulicht den Leistungsfluss, der den 2. Gang definiert. Auch dabei handelt es sich um einen Verwindungsgang, denn der Leistungsfluss wird von dem Antriebsmotor 4 über die Reibkupplung 3 auf die Außenwelle 6 übertragen und von dort zunächst von dem Zahnrad 7 über die beiden mittels der Kopplungsvorrichtung 16 und 22 drehfest mit der zweiten Zwischenwelle 14 verbundenen Zahnräder 9 und 10 auf die auf der leer mitlaufenden Innenwelle 5 sitzenden Zahnräder 11 und 17. Von dort verläuft der Leistungsfluss weiter auf die erste Zwischenwelle 13, und zwar über das Zahnrad 17 der Innenwelle 5 auf das mit diesem kämmende Zahnrad 19, welches mittels der Kopplungsvorrichtung 20 drehfest mit der ersten Zwischenwelle 13 verbunden ist. Bei dieser Konzeption des 2. Gangs ist das Abtriebszahnrad 26 über die Kopplungsvorrichtung 27 fest mit der ersten Zwischenwelle 13 verbunden, sodass das Abtriebszahnrad 26 das Drehmoment auf das Differentialzahnrad 23 übertragen kann.

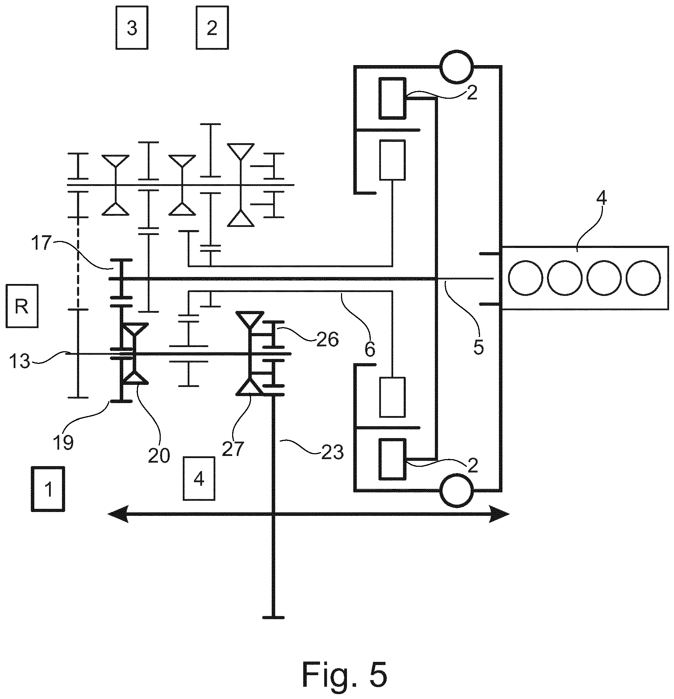

In den Figuren 5 bis 8 sind die vier Basisgänge drei bis sieben veranschaulicht. In diesen Darstellungen erfolgt der Leistungsfluss jeweils von dem Antriebsmotor 4 über eine der beiden Reibkupplungen 2 oder 3 auf die Innenwelle 5 bzw. die Außenwelle 6 und von dort über eine der beiden Zwischenwellen 13 bzw. 14 direkt auf das Differentialzahnrad 23.

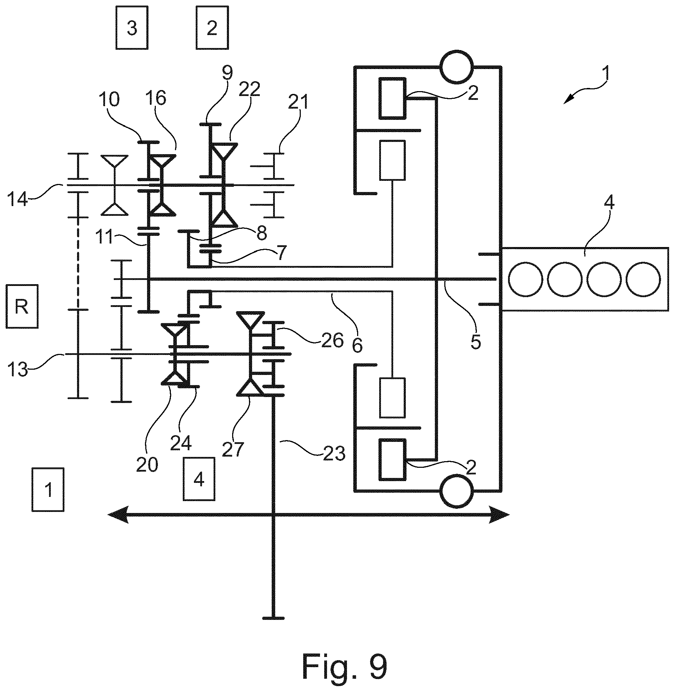

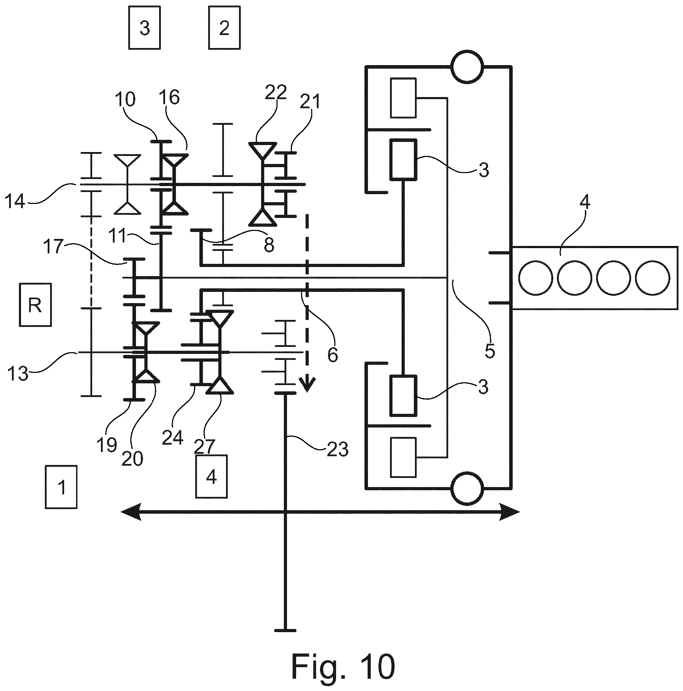

In den Figuren 9 und 10 sind die Gänge 7 und 8 veranschaulicht, die wiederum als Verwindungsgänge über beide Zwischenwellen 13 und 14 geschaltet sind.

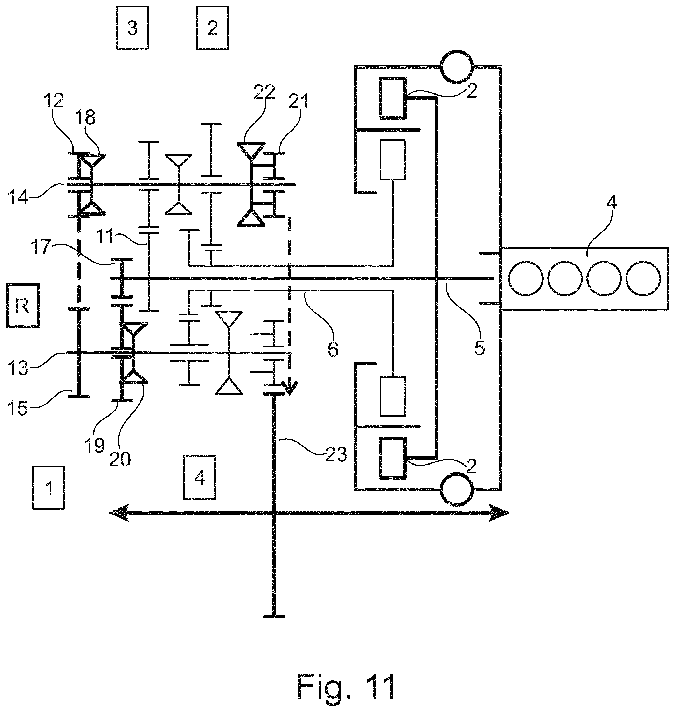

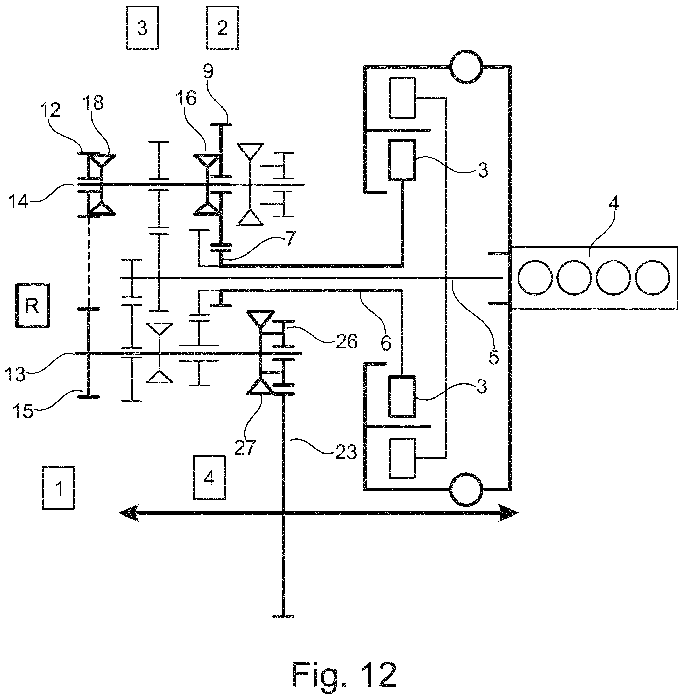

In den Figuren 11 und 12 sind die Leistungsflüsse für die beiden Rückwärtsgänge veranschaulicht, die wiederum als Verwindungsgänge geschaltet sind, da die Leistungsflüsse über beide Zwischenwellen 13 und 14 verlaufen.

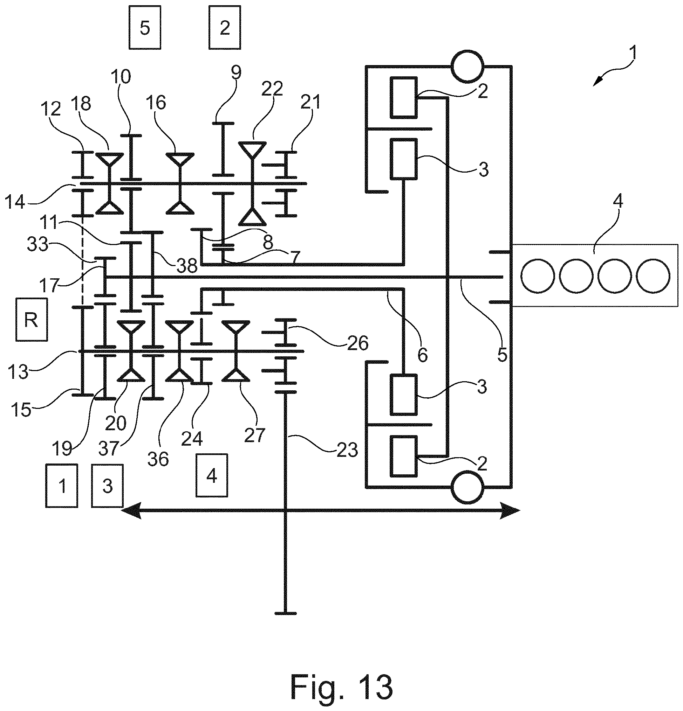

In Fig. 13 ist ein zweites Ausführungsbeispiel der Erfindung dargestellt, bei dem das Getriebe fünf Radsätze und sechs Kopplungsvorrichtungen aufweist.

In dieser Figur sind für identische Teile die gleichen Positionszahlen verwendet worden wie in der Fig. 1.

Im Unterschied zu dem Ausführungsbeispiel gemäß Fig. 1 ist auf der Innenwelle 5 ein zusätzliches, fest mit dieser verbundenes Zahnrad 38 angeordnet, welches mit einem drehbar auf der ersten Zwischenwelle 13 gelagerten Zahnrad 37 im Eingriff ist.

Zwischen dem auf der ersten Zwischenwelle 13 gelagerten Zahnrad 37 und dem in der Zeichnung rechts davon angeordneten Zahnrad 24 ist eine weitere Kopplungsvorrichtung 36 angeordnet, die zweiseitig wirkend ausgebildet ist und wahlweise entweder das Zahnrad 24 oder das Zahnrad 37 mit der ersten Zwischenwelle 13 drehfest verbindet.

Bei dem in Fig. 13 dargestellten Ausführungsbeispiel verlaufen die Zahnradpaarungen 1, 3 und 4 über die erste Zwischenwelle 13 und die Zahnradpaarungen 5 und 2 über die zweite Zwischenwelle 14.

Mit dem in Fig. 13 dargestellten Getriebe sind elf Vorwärtsgänge und zwei Rückwärtsgänge schaltbar.

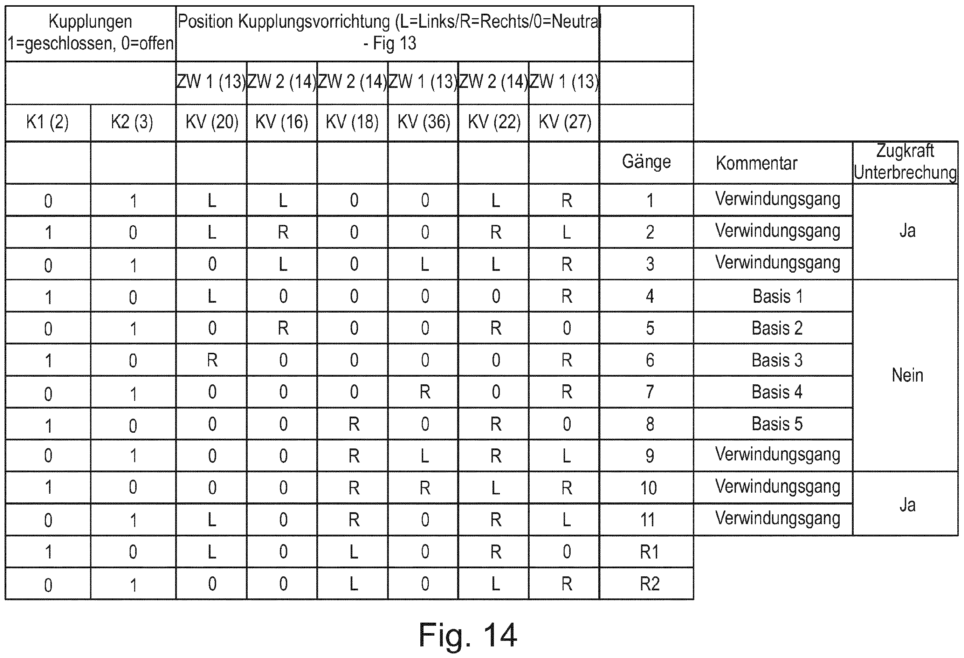

In Fig. 14 ist das Schaltschema zu dem in Fig. 13 dargestellten Getriebe aufgezeigt. Auf der linken Seite sind wiederum die beiden Reibkupplungen K1 und K2 mit den Positionszahlen 2 und 3 aufgeführt, wobei die Zahl "1" die Kupplung als geschlossen und die "0" als offen kennzeichnet.

In dem mittleren Feld sind die Stellungen der Kopplungsvorrichtungen (KV) veranschaulicht, wobei "L" = linke Position, "R" = rechte Position und "0" = neutrale Stellung bedeuten.

In der folgenden rechten Spalte sind die Vorwärtsgänge 1 bis 11 sowie die beiden Rückwärtsgänge R1 und R2 aufgeführt.

Bei dem 1. bis 3. Gang handelt es sich um Verwindungsgänge, bei denen eine Zugkraftunterbrechung vorhanden ist. Bei dem 4. bis 8. Gang handelt es sich um die fünf Basisgänge, die über die vorhandenen Zahnradpaarungen ohne Zugkraftunterbrechung schaltbar sind. Der 9. Gang ist wiederum ein Verwindungsgang, jedoch ohne Zugkraftunterbrechung. Der der 10. und 11. Gang sind wiederum Verwindungsgänge, allerdings mit Zugkraftunterbrechung.

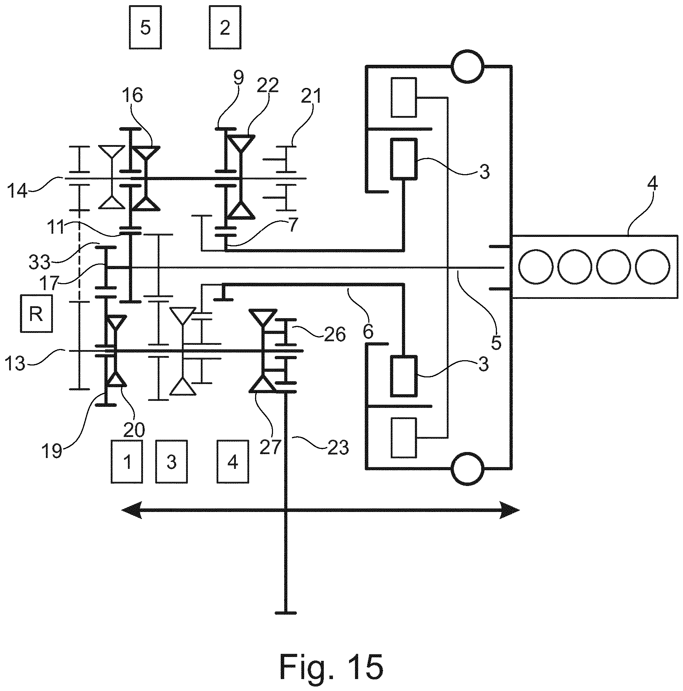

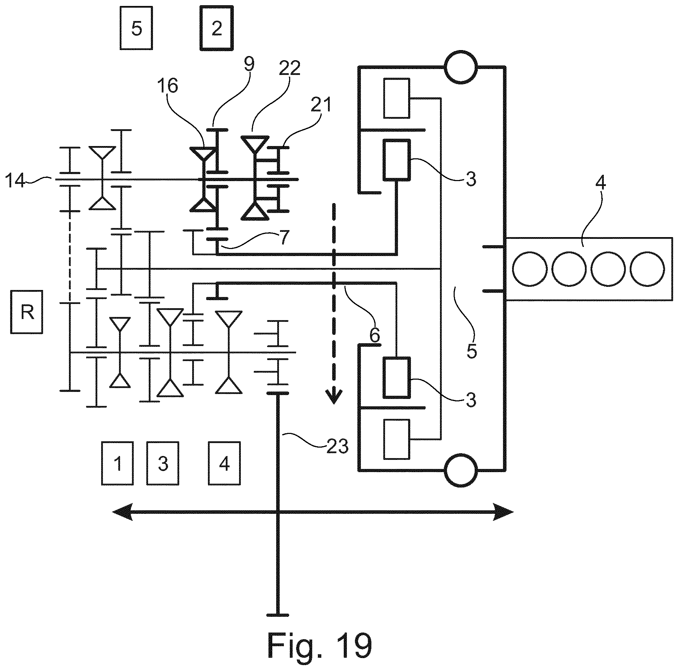

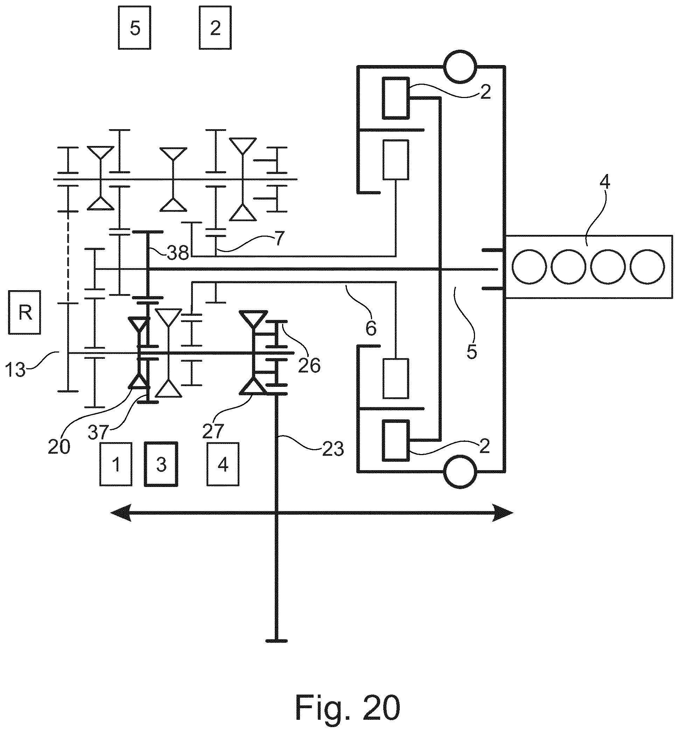

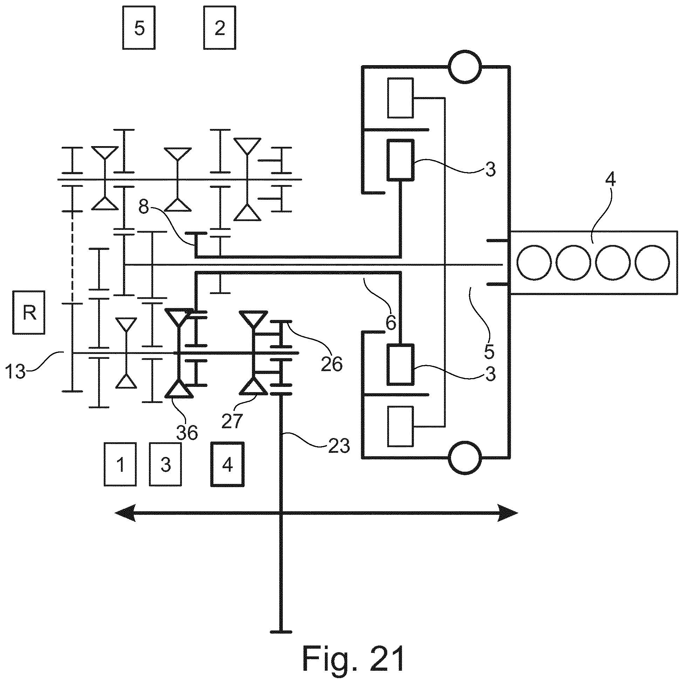

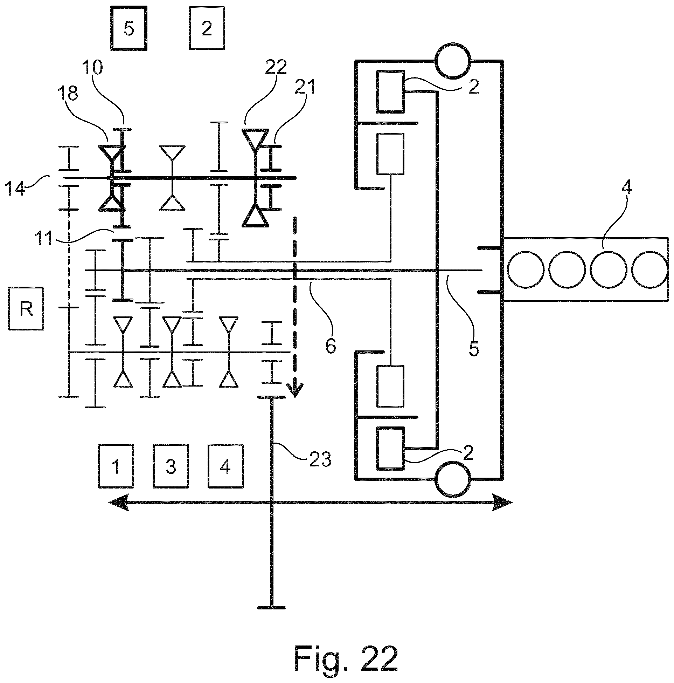

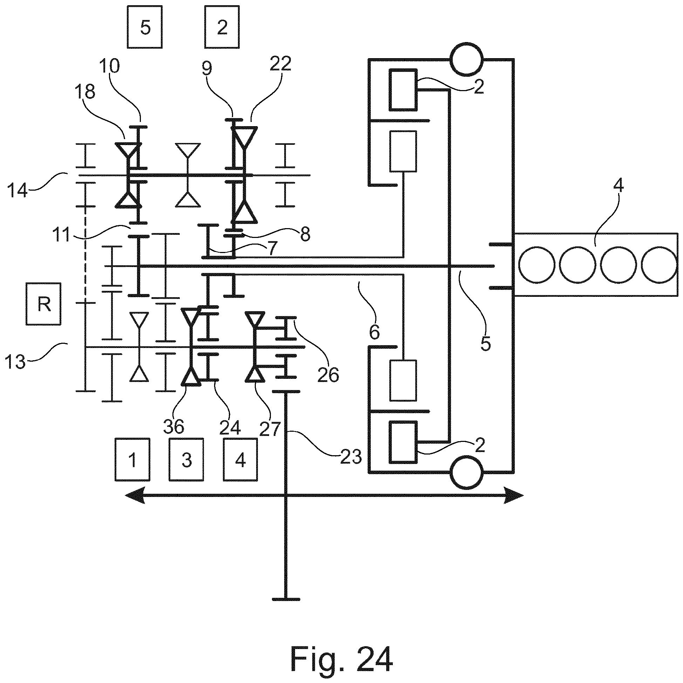

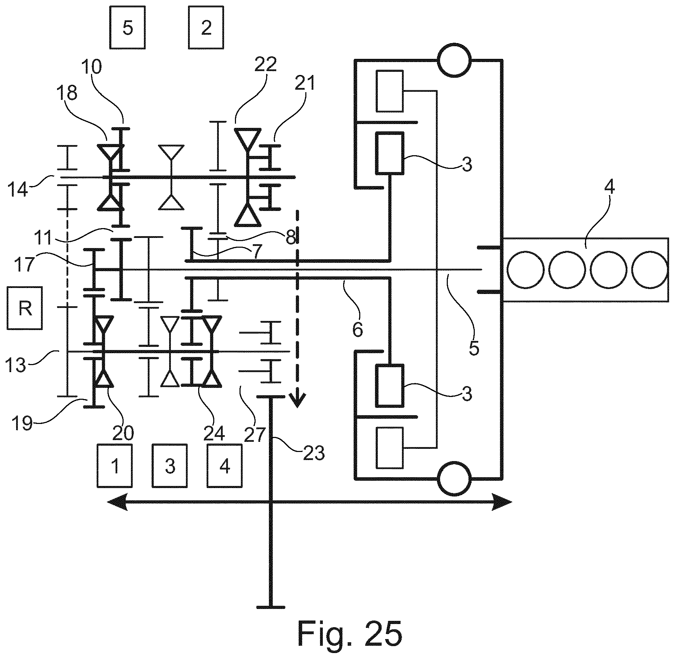

In den folgenden Figuren 15 bis 27 ist der Leistungsfluss für jeden einzelnen Gang in dick ausgezogenen Linien dargestellt, während die inaktiven Bereiche des Getriebes in dünnen Linien dargestellt sind.

In Fig. 15 ist die Schaltung des 1. Gangs veranschaulicht, der ein Verwindungsgang mit Zugkraftunterbrechung ist. Der Leistungsfluss verläuft bei diesem 1. Gang von dem Antriebsmotor 4 über die Reibkupplung 3 auf die Außenwelle 6 und von dort über das fest auf der Außenwelle sitzende Zahnrad 7 auf das auf der zweiten Zwischenwelle 14 sitzende Zahnrad 9, welches über die Kopplungsvorrichtung 22 drehfest mit der Zwischenwelle 14 verbunden ist. Über das Zahnrad 10, welches mittels der Kopplungsvorrichtung 16 ebenfalls drehfest mit der zweiten Zwischenwelle 14 verbunden ist, verläuft der Leistungsfluss über das Zahnrad 11 auf die leer mitlaufende Innenwelle 5 und gelangt von dort über das Zahnrad 17 und über das mit diesem kämmende Zahnrad 19 auf die zweite Zwischenwelle 14, wobei das Zahnrad 19 über die Kopplungsvorrichtung 20 drehfest mit der ersten Zwischenwelle 13 verbunden ist.

Bei dieser Schaltung ist das auf der ersten Zwischenwelle 13 sitzende Abtriebszahnrad 26 über die Kopplungsvorrichtung 27 drehfest mit der ersten Zwischenwelle 13 verbunden, sodass der Leistungsfluss von dem Abtriebszahnrad 26 auf das Differentialzahnrad 23 übertragen wird, während das auf der zweiten Zwischenwelle 14 sitzende Abtriebszahnrad 21 augekuppelt ist und leer mitläuft.

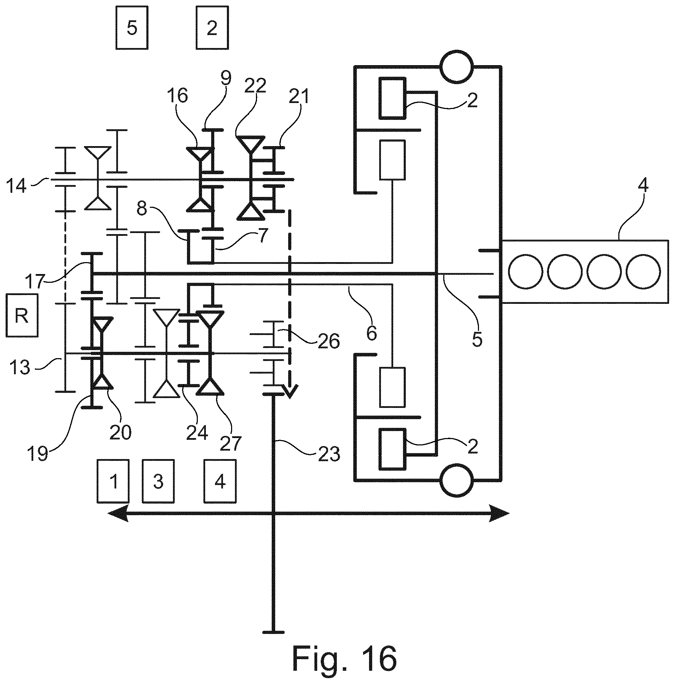

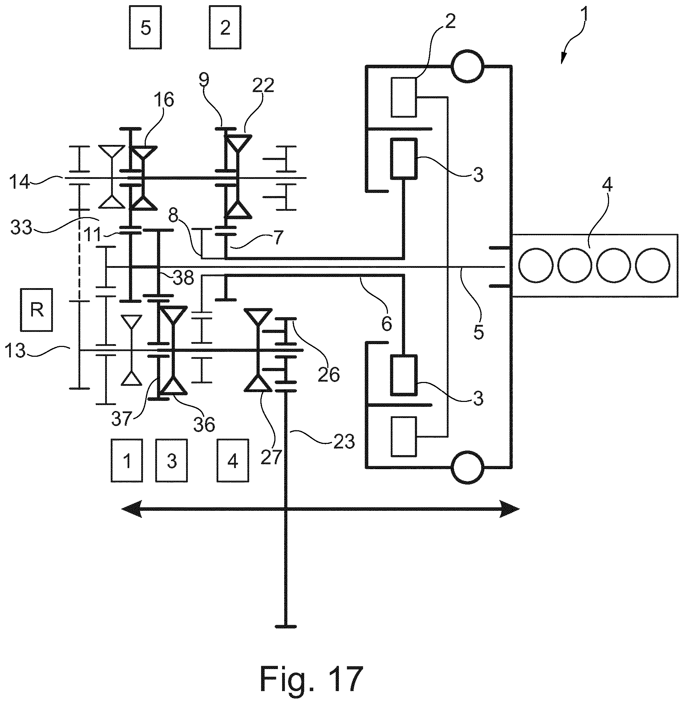

In den Figuren 16 und 17 sind die Schaltungen für den 2. und 3. Gang veranschaulicht, wobei aus dem Leistungsfluss hervorgeht, dass es sich hierbei ebenfalls um Verwindungsgänge handelt, zumal der Leistungsfluss über beide Zwischenwellen 13 und 14 verläuft.

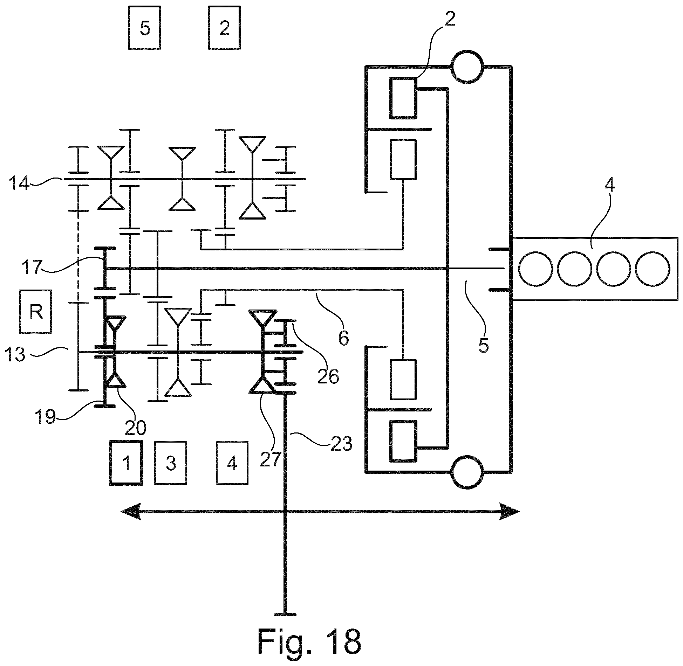

In den Figuren 18 bis 22 ist der Leistungsfluss für den 4. bis 8. Gang veranschaulicht. Hierbei handelt es sich um die fünf Basisgänge, die sich aus den fünf Zahnradpaarungen ableiten. Die Leistungsflüsse verlaufen immer nur jeweils über eine der beiden Zwischenwellen 13 bzw. 14.

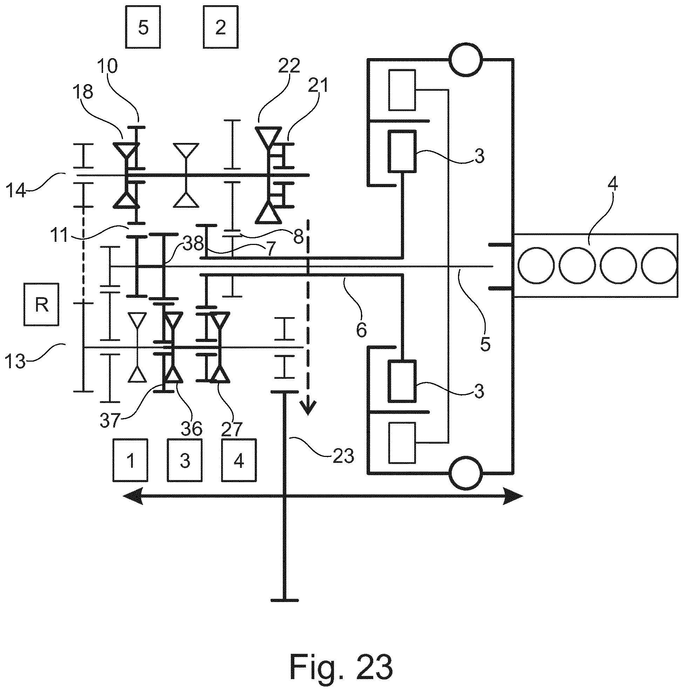

In den Figuren 23 bis 25 sind die Leistungsflüsse des 9. bis 11. Gangs veranschaulicht. Hierbei handelt es sich wiederum um Verwindungsgänge, da der jeweilige Leistungsfluss über beide Zwischenwellen 13 und 14 verläuft.

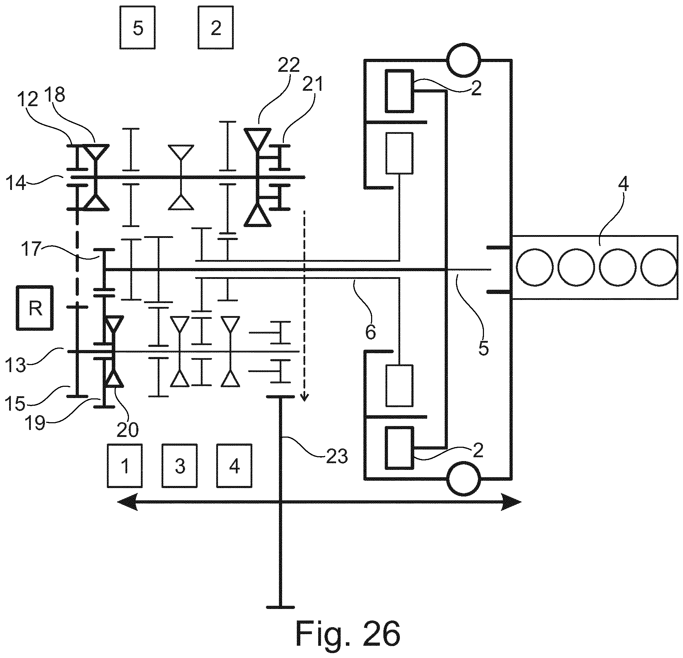

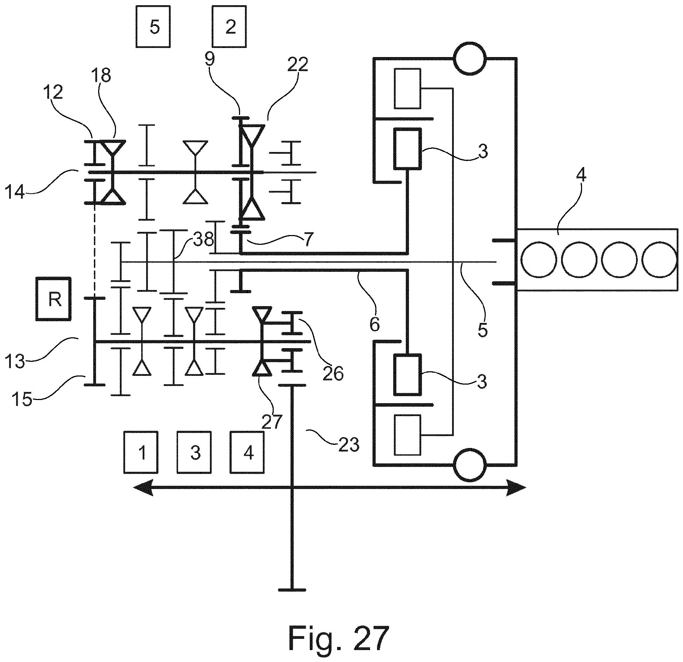

In den Figuren 26 und 27 ist der jeweilige Leistungsfluss für die beiden Rückwärtsgänge veranschaulicht, wobei es sich hierbei ebenfalls um Verwindungsgänge handelt, da der jeweilige Leistungsfluss wiederum über beide Zwischenwellen 13 und 14 verläuft.

Wie aus den beiden Ausführungsbeispielen hervorgeht, sind mit relativ wenigen Radsätzen größere Gangzahlen möglich, wobei zwischen den einzelnen Gängen nur relativ geringe Sprünge vorhanden sind und die Spreizung optimal eingestellt werden kann.

### Bezugszeichenliste

- 1: Doppelkupplungsgetriebe
- 2: Reibkupplung (K1)
- 3: Reibkupplung (K2)
- 4: Antriebsmotor
- 5: Innenwelle
- 6: Außenwelle
- 7: Zahnrad
- 8: Zahnrad
- 9: Zahnrad
- 10: Zahnrad
- 11: Zahnrad
- 12: Zahnrad
- 13: erste Zwischenwelle (ZW 1)
- 14: zweite Zwischenwelle (ZW 2)
- 15: Zahnrad
- 16: Kopplungsvorrichtung
- 17: Zahnrad
- 18: Kopplungsvorrichtung
- 19: Zahnrad
- 20: Kopplungsvorrichtung
- 21: Abtriebszahnrad
- 22: Kopplungsvorrichtung
- 23: Differentialzahnrad
- 24: Zahnrad
- 26: Abtriebszahnrad
- 27: Kopplungsvorrichtung
- 29: Zahnrad
- 30: Zahnrad
- 33: gestrichelte Linie
- 36: Kopplungsvorrichtung
- 37: Zahnrad
- 38: Zahnrad

## Patentansprüche

1. Doppelkupplungsgetriebe für Kraftfahrzeuge mit
- einer ersten Eingangswelle und einer zweiten Eingangswelle,
- zwei Kupplungen (2, 3), über die die erste Eingangswelle und die zweite Eingangswelle wahlweise mit einem Antriebsmotor (4) kuppelbar sind,
- zwei parallel zu den Getriebeeingangswellen (5, 6) angeordneten Zwischenwellen (13, 14),
- Zahnradpaarungen von Festrädern und Losrädern, von denen ein erstes Zahnrad auf einer der Eingangswellen und ein zweites Zahnrad auf einer der Zwischenwellen angeordnet ist, wobei sämtliche auf den Zwischenwellen (13, 14) angeordneten Zahnräder als Losräder ausgebildet sind,
- Kopplungsvorrichtungen, über die die Losräder mit der jeweiligen Zwischenwelle wahlweise verbindbar sind, wobei die für die Abtriebszahnräder (21, 26) der Zwischenwellen (13, 14) vorgesehenen Kopplungsvorrichtungen (22, 27) zweiseitig wirkend ausgebildet sind, und
- je einem auf den beiden Zwischenwellen (13, 14) angeordneten Abtriebszahnrad, wobei die Abtriebszahnräder (21, 26) beider Zwischenwellen (13, 14) mit einem Differentialrad (23) kämmen und drehfest mit der jeweiligen Zwischenwelle wechselweise verbindbar sind,
**dadurch gekennzeichnet,**
**dass** sämtliche auf den Zwischenwellen (13, 14) vorgesehenen Kopplungsvorrichtungen zweiseitig wirkend ausgebildet sind.

2. Doppelkupplungsgetriebe nach Anspruch 1,
**dadurch gekennzeichnet,**
**dass** das Getriebe vier oder fünf von den in Anspruch 1 genannten Zahnradpaarungen aufweist.

3. Doppelkupplungsgetriebe nach Anspruch 2,
**dadurch gekennzeichnet,**
**dass** bei einem Getriebe mit genau vier von den in Anspruch 1 genannten Zahnradpaarungen fünf Kopplungsvorrichtungen (16, 18, 20, 22, 27) vorgesehen sind.

4. Doppelkupplungsgetriebe nach Anspruch 3,
**dadurch gekennzeichnet,**
**dass** der 1. und der 4. Gang auf einer der Zwischenwellen und der 2. und 3. Gang auf der anderen Zwischenwelle positioniert sind.

5. Doppelkupplungsgetriebe nach Anspruch 4
**dadurch gekennzeichnet,**
**dass** acht Vorwärtsgänge und zwei Rückwärtsgänge schaltbar sind.

6. Doppelkupplungsgetriebe nach einem der Ansprüche 3 bis 5,
**dadurch gekennzeichnet,**
**dass** der 3., 4., 5. und 6. Vorwärtsgang als Basisgänge schaltbar sind.

7. Doppelkupplungsgetriebe nach Anspruch 5 oder 6,
**dadurch gekennzeichnet,**
**dass** der 1., 2., 7. und 8. Vorwärtsgang als Verwindungsgänge über beide Zwischenwellen (13, 15) schaltbar sind.

8. Doppelkupplungsgetriebe nach einem der Ansprüche 5 bis 7,
**dadurch gekennzeichnet,**
**dass** der 2. bis 7. Vorwärtsgang ohne Zugkraftunterbrechung schaltbar sind.

9. Doppelkupplungsgetriebe nach Anspruch 2,
**dadurch gekennzeichnet,**
**dass** bei einem Getriebe mit genau fünf von den in Anspruch 1 genannten Zahnradpaarungen sechs Kopplungsvorrichtungen (16, 18, 20, 22, 27, 26) vorgesehen sind.

10. Doppelkupplungsgetriebe nach Anspruch 2,
**dadurch gekennzeichnet,**
**dass** der 1. und 3. Gang auf einer der Zwischenwellen und der 5. Gang auf der anderen Zwischenwelle positioniert ist.

11. Doppelkupplungsgetriebe nach Anspruch 9 oder 10,
**dadurch gekennzeichnet,**
**dass** elf Vorwärtsgänge und zwei Rückwärtsgänge schaltbar sind.

12. Doppelkupplungsgetriebe nach Anspruch 11,
**dadurch gekennzeichnet,**
**dass** der 4. bis 8. Vorwärtsgang als Basisgänge schaltbar sind.

13. Doppelkupplungsgetriebe nach einem der Ansprüche 9 bis 12,
**dadurch gekennzeichnet,**
**dass** der 1. bis 3. und der 9. bis 11. Vorwärtsgang als Verwindungsgänge über die Zahnradpaarungen beider Zwischenwellen (13, 14) schaltbar sind.

14. Doppelkupplungsgetriebe nach einem der Ansprüche 9 bis 13,
**dadurch gekennzeichnet,**
**dass** der 4. bis 9. Vorwärtsgang ohne Zugkraftunterbrechung schaltbar sind.

## Claims

1. Dual clutch transmission for motor vehicles having
- a first input shaft and a second input shaft,
- two clutches (2, 3), by means of which the first input shaft and the second input shaft can be selectively coupled to the engine (4),
- two intermediate shafts (13, 14) arranged parallel to the transmission input shafts (5, 6),
- gearwheel pairs of fixed wheels and freely rotating wheels, of which a first gearwheel is arranged on one of the input shafts and a second gearwheel is arranged on one of the intermediate shafts, wherein all the gearwheels arranged on the intermediate shafts (13, 14) are designed as freely rotating wheels,
- coupling devices, by means of which the freely rotating wheels can be selectively connected to the respective intermediate shaft, wherein the coupling devices (22, 27) provided for the output gearwheels (21, 26) of the intermediate shafts (13, 14) are of double-acting design, and
- an output gearwheel arranged on each of the two intermediate shafts (13, 14), wherein the output gearwheels (21, 26) of both intermediate shafts (13, 14) mesh with a differential wheel (23) and can be alternately connected for conjoint rotation to the respective intermediate shaft,
**characterized in that**
all the coupling devices provided on the intermediate shafts (13, 14) are of double-acting design.

2. Dual clutch transmission according to Claim 1,
**characterized in that**
the transmission has four or five of the gearwheel pairs mentioned in Claim 1.

3. Dual clutch transmission according to Claim 2,
**characterized in that**
in the case of a transmission with exactly four of the gearwheel pairs mentioned in Claim 1, five coupling devices (16, 18, 20, 22, 27) are provided.

4. Dual clutch transmission according to Claim 3,
**characterized in that**
the 1^{st} and 4^{th} gears are positioned on one of the intermediate shafts and the 2^{nd} and 3^{rd} gears are positioned on the other intermediate shaft.

5. Dual clutch transmission according to Claim 5
**characterized in that**
eight forward gears and two reverse gears can be selected.

6. Dual clutch transmission according to one of Claims 3 to 5,
**characterized in that**
the 3^{rd}, 4^{th}, 5^{th} and 6^{th} forward gears can be selected as basic gears.

7. Dual clutch transmission according to Claim 5 or 6,
**characterized in that**
the 1^{st}, 2^{nd}, 7^{th} and 8^{th} forward gears can be selected as winding path gears via both intermediate shafts (13, 15).

8. Dual clutch transmission according to one of Claims 5 to 7,
**characterized in that**
the 2^{nd} to 7^{th} forward gears can be selected without interrupting the tractive effort.

9. Dual clutch transmission according to Claim 2,
**characterized in that**
in the case of a transmission with exactly five of the gearwheel pairs mentioned in Claim 1, six coupling devices (16, 18, 20, 22, 27, 26) are provided.

10. Dual clutch transmission according to Claim 2,
**characterized in that**
the 1^{st} and 3^{rd} gears are positioned on one of the intermediate shafts and the 5^{th} gear is positioned on the other intermediate shaft.

11. Dual clutch transmission according to Claim 9 or 10,
**characterized in that**
eleven forward gears and two reverse gears can be selected.

12. Dual clutch transmission according to Claim 11,
**characterized in that**
the 4^{th} to 8^{th} forward gears can be selected as basic gears.

13. Dual clutch transmission according to one of Claims 9 to 12,
**characterized in that**
the 1^{st} to 3^{rd} and the 9^{th} to 11^{th} forward gears can be selected as winding path gears via the gearwheel pairs of both intermediate shafts (13, 14).

14. Dual clutch transmission according to one of Claims 9 to 13,
**characterized in that**
the 4^{th} to 9^{th} forward gears can be selected without interrupting the tractive effort.

## Revendications

1. Boîte de vitesses à double embrayage pour véhicules automobiles, comprenant
- un premier arbre d'entrée et un deuxième arbre d'entrée,
- deux embrayages (2, 3) par le biais desquels le premier arbre d'entrée et le deuxième arbre d'entrée peuvent être accouplés de manière sélective à un moteur d'entraînement (4),
- deux arbres intermédiaires (13, 14) disposés parallèlement aux arbres d'entrée de boîte de vitesses (5, 6),
- des appariements de roues dentées constitués de roues fixes et de roues libres, dont une première roue dentée est disposée sur l'un des arbres d'entrée et une deuxième roue dentée est disposée sur l'un des arbres intermédiaires, toutes les roues dentées disposées sur les arbres intermédiaires (13, 14) étant réalisées sous forme de roues libres,
- des dispositifs de couplage par le biais desquels les roues libres peuvent être connectées de manière sélective à l'arbre intermédiaire respectif, les dispositifs de couplage (22, 27) prévus pour les roues dentées de prise de force (21, 26) des arbres intermédiaires (13, 14) étant réalisés de manière à agir des deux côtés, et
- à chaque fois une roue dentée de prise de force disposée sur les deux arbres intermédiaires (13, 14), les roues dentées de prise de force (21, 26) des deux arbres intermédiaires (13, 14) s'engrenant avec une roue différentielle (23) et pouvant être connectées en alternance de manière solidaire en rotation à l'arbre intermédiaire respectif,
**caractérisée en ce que**
tous les dispositifs de couplage prévus sur les arbres intermédiaires (13, 14) sont réalisés de manière à agir des deux côtés.

2. Boîte de vitesses à double embrayage selon la revendication 1,
**caractérisée en ce que**
la boîte de vitesses présente quatre ou cinq des appariements de roues dentées cités dans la revendication 1.

3. Boîte de vitesses à double embrayage selon la revendication 2,
**caractérisée en ce que**
dans le cas d'une boîte de vitesses avec exactement quatre des appariements de roues dentées cités dans la revendication 1, cinq dispositifs de couplage (16, 18, 20, 22, 27) sont prévus.

4. Boîte de vitesses à double embrayage selon la revendication 3,
**caractérisée en ce que**
la première et la quatrième vitesse sont positionnées sur l'un des arbres intermédiaires et la deuxième et la troisième vitesse sont positionnées sur l'autre arbre intermédiaire.

5. Boîte de vitesses à double embrayage selon la revendication 4,
**caractérisée en ce que**
huit vitesses de marche avant et deux vitesses de marche arrière peuvent être commutées.

6. Boîte de vitesses à double embrayage selon l'une quelconque des revendications 3 à 5, **caractérisée en ce que**
la troisième, quatrième, cinquième et sixième vitesse de marche avant peuvent être commutées en tant que vitesses de base.

7. Boîte de vitesses à double embrayage selon la revendication 5 ou 6,
**caractérisée en ce que**
la première, deuxième, septième et huitième vitesses de marche avant peuvent être commutées en tant que vitesses à trajet sinueux par le biais des deux arbres intermédiaires (13, 15).

8. Boîte de vitesses à double embrayage selon l'une quelconque des revendications 5 à 7,
**caractérisée en ce que**
les deuxième à septième vitesses de marche avant peuvent être commutées sans interruption de la force de traction.

9. Boîte de vitesses à double embrayage selon la revendication 2,
**caractérisée en ce que**
dans le cas d'une boîte de vitesses avec exactement cinq des appariements de roues dentées cités dans la revendication 1, six dispositifs de couplage (16, 18, 20, 22, 27, 26) sont prévus.

10. Boîte de vitesses à double embrayage selon la revendication 2,
**caractérisée en ce que**
les première et troisième vitesses sont positionnées sur l'un des arbres intermédiaires et la cinquième vitesse est positionnée sur l'autre arbre intermédiaire.

11. Boîte de vitesses à double embrayage selon la revendication 9 ou 10,
**caractérisée en ce**
**qu'**onze vitesses de marche avant et deux vitesses de marche arrière peuvent être commutées.

12. Boîte de vitesses à double embrayage selon la revendication 11,
**caractérisé en ce que**
les quatrième à huitième vitesses de marche avant peuvent être commutées en tant que vitesses de base.

13. Boîte de vitesses à double embrayage selon l'une quelconque des revendications 9 à 12,
**caractérisée en ce que**
les première à troisième et neuvième à onzième vitesses de marche avant peuvent être commutées en tant que vitesses à trajet sinueux par le biais des appariements de roues dentées des deux arbres intermédiaires (13, 14).

14. Boîte de vitesses à double embrayage selon l'une quelconque des revendications 9 à 13,
**caractérisée en ce que**
les quatrième à neuvième vitesses de marche avant peuvent être commutées sans interruption de la force de traction.
